# EUROPEAN PATENT SPECIFICATION

(11) **EP 0 905 695 B1**
(45) Date of publication and mention of the grant of the patent: **14.05.2003**
(21) Application number: 98402301.0
(22) Date of filing: 17.09.1998
(51) Int. Cl.: G11B 21/10

(54) **Tracking device with a coil driven actuator and a sensor coil to determine a position of the actuator**
Nachführvorrichtung mit spulengetriebenem Aktuator und Geberspule zur Bestimmung der Position des Aktuators
Dispositif de suivi à actionneur commandé par bobine et une bobine captrice pour déterminer la position de l'actionneur

(30) Priority: 29.09.1997 EP 97402267
(43) Date of publication of application: 31.03.1999
(73) Proprietor: DEUTSCHE THOMSON-BRANDT GMBH, 78048 Villingen-Schwenningen (DE)
(72) Inventor: Mahr, Peter, 92648 Boulogne (FR); Reiner, Gerhard, 92648 Boulogne (FR); Kaaden, Jürgen, 92648 Boulogne (FR)
(74) Representative: Rossmanith, Manfred, Dr.

(56) References cited:
- EP-A- 0 620 548
- FR-A- 2 699 723
- US-A- 4 017 858
- PATENT ABSTRACTS OF JAPAN vol. 12, no. 129 (P-692), 21 April 1988 & JP 62 252531 A (SEIKO), 4 November 1987
- PATENT ABSTRACTS OF JAPAN vol. 15, no. 268 (P-1224), 8 July 1991 & JP 03 088132 A (OKI)

## Description

The present invention relates to a tracking device in which a position of a coil driven actuator is determined using a sensor coil. Such a tracking device may typically be used in a recording and/or reading device in which a relative position between a writing and/or reading head and a data track is maintained in order to write and/or read data stored in the data track.

The French Patent Nr 92 15473 (publication No. 2 699 723) discloses a data reading device in which inside of a reading head an expanded laser beam is used to read data stored on a magnetic tape. The magnetic tape supports a multiplicity of longitudinal tracks containing data. The expanded laser beam illuminates at least a part of the mutiplicity of tracks simultaneously before being reflected and projected on a charge coupled device array (CCD). The CCD is divided in a number of cells each of which corresponds to a track read out with the expanded laser beam. For this reason a projection of the laser beam must be very precisely positioned on the CCD. It may happen that due to irregularities of the tracks on the magnetic tape, e.g. a transversal deviation the projection of the laser beam needs to be repositioned on the CCD. The disclosed device uses for this purpose a glass plate positioned between the magnetic tape and the CCD i.e. the laser beam crosses the glass plate before reaching the CCD. The glass plate may be moved in rotation around a rotation axis in such a way to reposition the projection of the reflected laser beam on the CCD. The glass plate is moved using an actuator which comprises an electromagnet and a permanent magnet. The electromagnet receives a tracking error signal from a servo loop which in a known manner determines errors in the positioning of the projection of the laser beam relative to the CCD. The movement and the position of the glass plate are solely controlled by the tracking error signal applied to the electromagnet. The lack of position information for the glass plate may be a drawback in some cases e.g. when a maximum and / or a minimum position of the glass plate and thus the actuator need to be known. This is for example the case before a coarse positioning where the whole reading head (comprising a laser, optics to expand the beam, the glass plate, the CCD etc ...) is moved tranversely to the tracks to read further tracks.

One aim of the present invention is to find a solution for a tracking device in which the position of the actuator may be easily determined.

A solution to the above mentioned problem is according to the invention found in a tracking device which enables a writing and/or reading head to write and/or read on a data track which comprises an actuator, a driving coil used to move the actuator using a magnetical force and according to a tracking error signal. The tracking device further comprises a reference signal generator which generates a reference signal having a determined voltage and frequency, the reference signal being fed to the driving coil without affecting a movement of the actuator, a sensor coil which through induction converts a magnetic field emitted from the driving coil and alternating at the determined frequency into an alternating voltage, a distance between the sensor coil and the driving coil varying proportionally to the movement of the actuator, processing means for converting the alternating voltage into a distance value which is representative of the distance between the sensor coil and the driving coil. The sensor coil and the use of magnetic induction to determine a position as such are well known by a man skilled in the art. The present invention allows them to be combined with a servo loop positioning device of an existing tracking device.

In a preferred embodiment the tracking device according to the invention comprises controlling means which produce a tracking signal for the driving coil as a result of a comparison of the tracking error signal and the distance value.

An advantage of the preferred embodiment is that a position of the actuator given by the distance value may be used together with the tracking error signal to achieve a precise repositioning of the actuator.

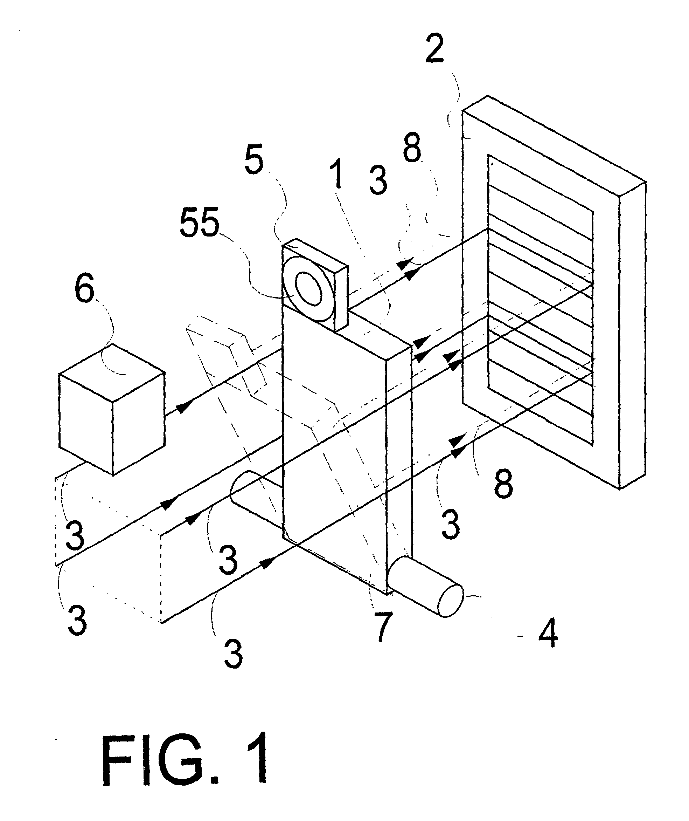

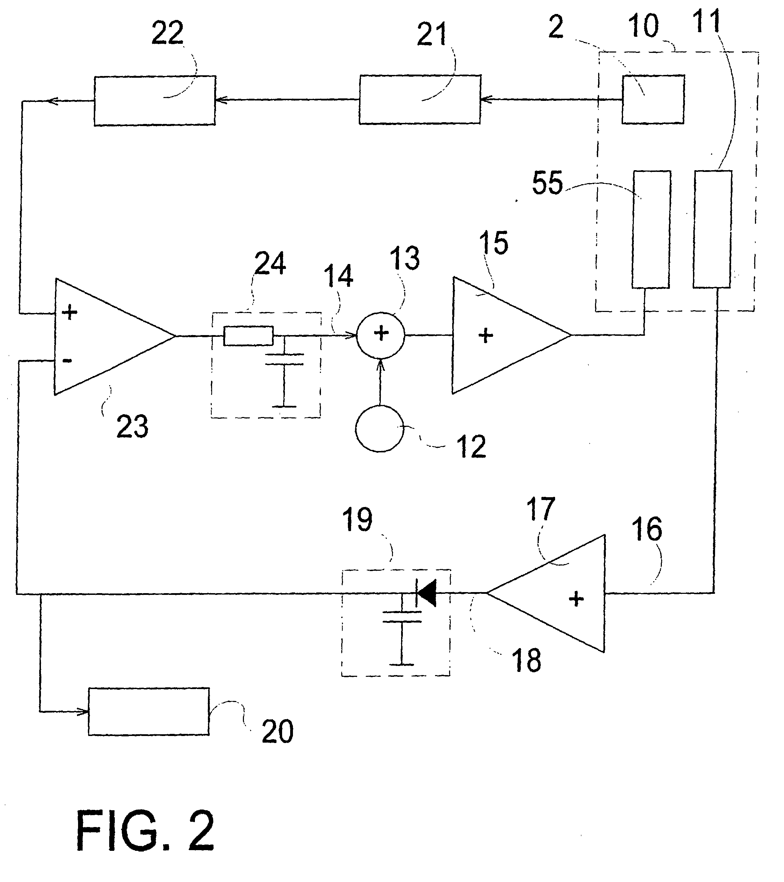

The following description will illustrate the present invention and its features using examples and Figures 1 and 2 wherein
- FIG. 1 schematically illustrates a glass plate, an actuator and a CCD,
- FIG. 2 contains a schematical illustration of a tracking device comprising a sensor coil.

All along the following description and in both Figures 1 and 2 the same references will be used to designate the same parts. The embodiments and examples described are not limitative of the present invention and may well be modified by a man skilled in the art while remaining in the scope of the present invention.

FIG. 1 shows a glass plate 1 and a CCD 2 on which an expanded light beam 3 represented using continuous arrowed lines is projected. The glass plate 1 is rotated around an axis 4 using an actuator 5. The actuator 5 comprises driving coil 55 which on receiving a voltage applied from an outside generator (not shown) applies a force to the glass plate 1 as a result of the inductive force in the presence of a permanent magnet 6. The glass plate 1 may for example be positioned in a position 7 represented using dotted lines. In the position 7 the glass plate 1 deviates the light beam 3 in a light beam 8 represented in dotted arrowed lines. The light beam 8 is relatively to the light beam 3 shifted when it reaches the CCD 2. The light beam 3 is thus repositioned on the CCD 2.

A box 10 in FIG. 2 comprises the CDD 2, the driving coil 55 and other elements (not shown) described for FIG.1. The box 10 further comprises a sensor coil 11 which may for example be mounted (referring to FIG. 1) between the driving coil 55 and the CCD 2. The sensor coil 11 registers variations of a magnetic field produced by the driving coil 55 when an external voltage is applied to the latter. Coming back to FIG. 2 a reference signal generator 12 generates a reference signal having a determined voltage and frequency. The reference signal is added to a tracking signal 14 by an adding device 13, subsequently amplified by an amplifier 15 and fed to the driving coil 55. The reference signal should not affect the movement of the actuator 5 when fed to the driving coil 55. The determined frequency may for example be 40 kHz. The sensor coil 11 registers a magnetic field emitted by the driving coil 55 and converts this magnetic field through induction in an alternating voltage 16 which is amplified in a second amplifier 17. An amplified alternating voltage 18 at the output of the second amplifier 17 is applied to a rectifier 19 to obtain a direct current (DC) signal which is representative of the distance between the sensor coil 11 and the driving coil 55. The DC signal may be converted in a read out device 20 to a position value for the glass plate 1 (not shown).

A tracking processor 21 uses a signal from the CCD 2 to produce a tracking error signal 22 in a manner known from a man skilled in the art. The tracking error signal 22 is produced by the tracking processor at a relatively low frequency, e.g. 100 Hz. The tracking error signal 22 and the DC signal are fed to the entrances of a differential amplifier 23 to be subtracted from each other. The output signal from the differential amplifier 23 is filtered in a low pass filter 24 to obtain the tracking signal 14 at the relatively low frequency. The tracking signal 14 is fed to the driving coil 55 through the power amplifier 15 to position the actuator 5 and thus the glass plate 1 to a value indicated by the tracking error signal 22.

In a preferred embodiment some parts, eg the reference generator 12, the adding device 13, the amplifier 15, the second amplifier 17, the rectifier 19, the differential amplifier 23 and the low pass filter 24, are intergreted in an integrated circuit (not shown).

In another preferred embodiment some of the parts, eg the reference generator 12, the adding device 13, the second amplifier 17, the rectifier 19, the tracking processor 21, the differential amplifier 23 and the low pass filter 24 are realized using digital signal processing (not shown). This reduces the costs related to hardware.

## Claims

1. A tracking device to enable a writing and/or reading head to write and/or read on a data track comprising an actuator (5), a driving coil (55) used to move said actuator using a magnetical force and according to a tracking error signal (22), said tracking device being **characterized in that** it further comprises
- a reference signal generator (12) which generates a reference signal having a determined voltage and frequency, said reference signal being fed to said driving coil without affecting a movement of said actuator,
- a sensor coil (11) which through induction converts a magnetic field emitted from said driving coil and alternating at said determined frequency into an alternating voltage (16), a distance between said sensor coil and said driving coil varying proportionally to said movement of said actuator,
- processing means (17, 18, 19, 20) for converting said alternating voltage into a distance value which is representative of said distance between said sensor coil and said driving coil.

2. A tracking device according to claim 1 **characterized in that** it further comprises controlling means which produce a tracking signal (14) for said driving coil as a result of a comparison of said tracking error signal and said distance value.

3. A tracking device according to claim 2 **characterized in that** said processing means comprise a rectifier (19) and said controlling means comprise a differential amplifier (23) which subtracts said tracking error value and said distance value from each other.

4. A tracking device according to anyone of claims 2 to 3, **characterized in that** it comprises an adding device (13) to add said reference signal to said tracking signal (14), an amplifier (15) to amplify an output from said adding device and a tracking processor (21) to produce said tracking error signal (22), said controlling means (23) comprising a low pass filter (24) and said procesing means comprising a second amplifier (17) for amplifying said alternating voltage (16).

5. A tracking device according to claim 4, **characterized in that** at least said reference signal generator (12), said adding device (13), said amplifier (15), said second amplifier (17), said rectifier (19) and said differential amplifier 23 are integrated in an integrated circuit.

6. A tracking device according to claim 4 **characterized in that** said reference signal generator (12), said adding device (13), said second amplifier (17), said rectifier (19), said tracking processor (21), said differential amplifier (23) and said low pass filter (24) are realized using digital signal processing.

## Patentansprüche

1. Spurführungsvorrichtung, die es einem Schreib- und/oder Lesekopf ermöglicht, auf einer Datenspur zu lesen und/oder zu schreiben, mit einem Aktuator (5), einer Steuerspule (55) zur Bewegung des Aktuators durch eine Magnetkraft und entsprechend einem Spurfehlersignal (22),
**gekennzeichnet durch** folgende Merkmale:
- ein Referenzsignalgenerator (12), der ein Referenzsignal mit einer bestimmten Spannung und Frequenz erzeugt, wobei das Referenzsignal ohne Beeinflussung einer Bewegung des Aktuators der Steuerspule zugeführt wird,
- eine Sensorspule (11), die **durch** Induktion ein Magnetfeld, das von der Steuerspule ausgeht und sich mit der bestimmten Frequenz ändert, in eine Wechselspannung (16) umsetzt, wobei sich der Abstand zwischen der Sensorspule und der Steuerspule proportional zu der Bewegung des Aktuators ändert,
- Verarbeitungsmittel (17, 18, 19, 20) zur Umsetzung der Wechselspannung in einen Abstandswert, der den Abstand zwischen der Sensorspule und der Steuerspule darstellt.

2. Spurführungsvorrichtung nach Anspruch 1, **gekennzeichnet durch** Steuermittel, die ein Spurführungssignal (14) für die Steuerspule aufgrund des Vergleichs des Spurfehlersignals und des Abstandswertes erzeugen.

3. Spurführungsvorrichtung nach Anspruch 2, **dadurch gekennzeichnet, dass** die Verarbeitungsmittel einen Gleichrichter (19) umfassen und die Steuermittel einen Differenzverstärker (23) aufweisen, der den Spurfehlerwert und den Abstandswert voneinander subtrahiert.

4. Spurführungsvorrichtung nach einem der Ansprüche 2 bis 3, **gekennzeichnet durch** eine Addiereinheit (13) zur Addition des Referenzsignals zu dem Spurführungssignal (14), einen Verstärker (15) zur Verstärkung des Ausgangs von der Addiereinheit und einen Spurführungsprozessor (21) zur Erzeugung des Spurfehlersignals (22), wobei die Steuermittel (23) ein Tiefpaßfilter (24) und die Verarbeitungsmittel einen zweiten Verstärker (17) zur Verstärkung der Wechselspannung (16) umfassen.

5. Spurführungsvorrichtung nach Anspruch 4, **dadurch gekennzeichnet, dass** wenigstens der Referenzsignalgenerator (12), die Addiereinheit (13), der Verstärker (15), der zweite Verstärker (17), der Gleichrichter (19) und der Differenzverstärker (23) in einer integrierten Schaltung integriert sind.

6. Spurführungsvorrichtung nach Anspruch 4, **dadurch gekennzeichnet, dass** der Referenzsignalgenerator (12), die Addiereinheit (13), der zweite Verstärker (17), der Gleichrichter (19), der Spurführungsprozessor (21), der Differenzverstärker (23) und das Tiefpaßfilter (24) durch eine digitale Signalverarbeitung gebildet sind.

## Revendications

1. Dispositif de suivi de piste permettant à une tête d'écriture et/ou de lecture d'écrire et/ou de lire sur une piste de données, comprenant un actionneur (5), une bobine de commande (55) utilisée pour déplacer ledit actionneur à l'aide d'une force magnétique et en fonction d'un signal d'erreur de suivi de piste (22), ledit dispositif de suivi de piste étant **caractérisé en ce qu'**il comprend en outre :
- un générateur de signal de référence (12) qui génère un signal de référence d'une tension et d'une fréquence déterminées, ledit signal de référence étant appliqué à ladite bobine de commande sans affecter un mouvement dudit actionneur,
- une bobine de détection (11) convertissant par induction un champ magnétique émis par la bobine de commande et alternant à la fréquence déterminée en une tension alternative (16), une distance entre ladite bobine de détection et ladite bobine de commande variant proportionnellement audit mouvement dudit actionneur,
- un moyen de traitement (17, 18, 19, 20) pour convertir ladite tension alternative en une valeur de distance représentant ladite distance entre ladite bobine de détection et ladite bobine de commande.

2. Dispositif de suivi de piste selon la revendication 1, **caractérisé en ce qu'**il comprend en outre un moyen de commande produisant un signal de suivi de piste (14) à l'intention de ladite bobine de commande, suite à une comparaison dudit signal d'erreur de suivi de piste et de ladite valeur de distance.

3. Dispositif de suivi de piste selon la revendication 2, **caractérisé en ce que** ledit moyen de traitement comprend un redresseur (19) et ledit moyen de commande comprend un amplificateur différentiel (23) qui soustrait l'une de l'autre ladite valeur d'erreur de suivi de piste et ladite valeur de distance.

4. Dispositif de suivi de piste selon l'une quelconque des revendications 2 à 3, **caractérisé en ce qu'**il comprend un dispositif additionneur (13) pour ajouter ledit signal de référence audit signal de suivi de piste (14), un amplificateur (15) pour amplifier une sortie dudit dispositif additionneur et un processeur de suivi de piste (21) pour produire ledit signal d'erreur de suivi de piste (22), ledit moyen de commande (23) comprenant un filtre passe-bas (24) et ledit moyen de traitement comprenant un deuxième amplificateur (17) pour amplifier ladite tension alternative (16).

5. Dispositif de suivi de piste selon la revendication 4, **caractérisé en ce qu'**au moins ledit générateur de signal de référence (12), ledit dispositif additionneur (13), ledit amplificateur (17), le redresseur (19) et ledit amplificateur différentiel (23) sont intégrés dans un circuit intégré.

6. Dispositif de suivi de piste selon la revendication 4, **caractérisé en ce que** ledit générateur de signal de référence (12), ledit dispositif additionneur (13), ledit deuxième amplificateur (17), ledit redresseur (19), ledit processeur de suivi de piste (21), ledit amplificateur différentiel (23) et ledit filtre passe-bas (24) sont réalisés à l'aide d'un traitement de signal numérique.
